# FASCICULE DE BREVET EUROPEEN

(11) **EP 0 539 301 B1**
(45) Date de publication et mention de la délivrance du brevet: **17.01.1996**
(21) Numéro de dépôt: 92420312.8
(22) Date de dépôt: 14.09.1992
(51) Int. Cl.: H02J 3/42

(54) **Dispositif de couplage d'une source extérieure d'alimentation en énergie électrique à un avion au sol**
Kupplungsvorrichtung einer äusseren Boden-Energieversorgung mit einem Flugzeug
Coupling device of an external power supply to an aircraft on the ground

(30) Priorité: 14.10.1991 FR 9112727
(43) Date de publication de la demande: 28.04.1993
(73) Titulaire: SCHNEIDER ELECTRIC SA, F-92100 Boulogne-Billancourt (FR)
(72) Inventeur: Fiorina, Jean-Noel, F-38050 Grenoble Cedex 9 (FR); Pillet, Jean-Jacques, F-38050 Grenoble Cedex 9 (FR)
(74) Mandataire: Jouvray, Marie-Andrée

(56) Documents cités:
- GB-A- 1 108 963
- GB-A- 1 108 964
- US-A- 4 937 462

## Description

La présente invention se rapporte à un dispositif de couplage d'une source extérieure d'alimentation en énergie électrique à un avion au sol.

Il est classique, en particulier pour éviter un niveau de bruit excessif sur les aéroports, de remplacer au sol le dispositif interne d'alimentation électrique d'un avion par une source extérieure, qui est par exemple une alimentation statique ou une alimentation utilisant un ou plusieurs groupes électrogènes, on comprend en effet que, si les génératrices ("Auxiliary power unit" ou "APU") de l'avion doivent être stoppées au sol, il est nécessaire de continuer à assurer sans discontinuité l'alimentation électrique de certains de ses appareils, dont l'éclairage, le chauffage, et surtout les ordinateurs de bord qui ne doivent souffir aucune interruption, même brève, d'alimentation en énergie électrique.

Dans le passé, les avions étaient équipés de batteries d'accumulateurs qui avaient pour fonction de continuer à alimenter au moins les ordinateurs de bord pendant l'intervalle de temps qui s'écoulait entre les deux opérations successives alors effectuées et consistant, à tout d'abord déconnecter les alternateurs 400 Hertz de bord, puis à connecter ensuite la source extérieure aux installations électriques de l'avion, cette connexion s'effectuant en fait par le branchement de la source extérieure sur une prise prévue à cet effet sous l'avion.

Dans un souci d'économie de poids et de volume, ces batteries de secours ont été supprimées sur les avions de modèle récent et remplacées par un dispositif électronique de mesure de calcul et de commande ayant pour but d'effectuer le couplage de la source extérieure et la déconnexion corrélative des alternateurs de bord avec un très faible temps de recouvrement et dans des conditions de concordance de phase qui devraient en principe permettre d'éviter toute coupure de l'alimentation des ordinateurs de bord, tout en ne causant pas de phénomènes dommageables.

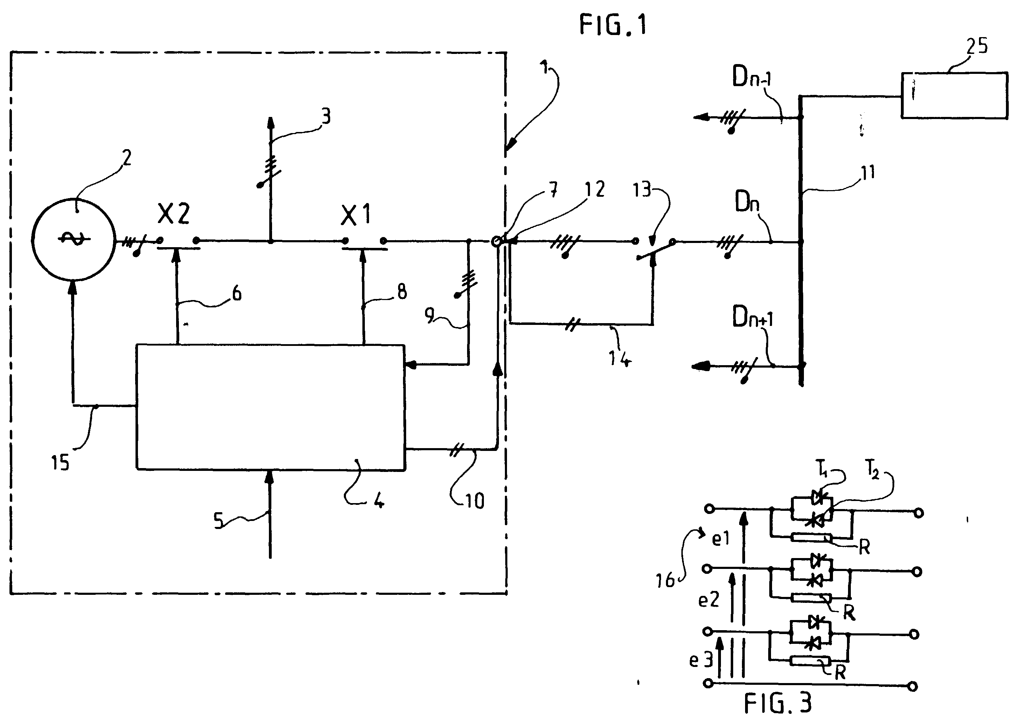

La figure 1 est un schéma synoptique de principe d'une installation de ce type, telle qu'elle équipe actuellement un certain nombre d'avions de modèle récent.

La partie qui est comprise à l'intérieur de l'avion, et qui est entourée en traits mixtes, est désignée sur cette figure par la référence 1.

Cet avion comporte classiquement au moins une génératrice de bord 2 qui délivre un courant alternatif à 400 Hertz sur une ligne triphasée 3 d'alimentation en énergie électrique alimentant les appareils de bord.

L'alimentation de la ligne 3 est réalisée via un contacteur triphasé X2, dont l'ouverture et la fermeture sont commandés par une unité de mesure, de calcul et de commande 4. Cette unité 4 est reliée par une entrée de commande 5 au poste de pilotage de l'avion. La commande du contacteur X2 s'effectue par une liaison 6.

La ligne centrale d'alimentation 3 est également reliée, via un autre contacteur triphasé X1 semblable au contacteur X2, à une prise multi-plots extérieure 7, généralement située sous l'avion, qui est destinée au branchement de la source extérieure. Le contacteur X1 est commandé par l'unité 4 via une liaison 8.

A l'intérieur de l'avion, la prise extérieure 7 est en outre reliée, par une liaison 9 de mesure de la tension extérieure appliquée sur la prise multi-plots 7, à l'unité de mesure de calcul et de commande 4. Cette dernière comporte une sortie bifilaire 10 qui vient alimenter deux des plots multiples de la prise extérieure 7.

La source extérieure 25 est par exemple connectée à une barre 11 de distribution triphasée et fournit sur l'aéroport du courant à 400 Hertz. La barre de distribution peut comporter plusieurs départs ...,Dn-1, Dn, Dn+1 le départ, ligne ou câble, Dn étant par exemple destiné à l'alimentation au sol de l'avion 1.

Le câble Dn est relié à une fiche multibroches 12, qui est une prise conjuguée de la prise d'avion 7, par l'intermédiaire d'un contacteur, classiquement électro-mécanique, triphasé 13 dont la liaison bifilaire de commande 14 est reliée à deux des bornes de la fiche multibroches 12. Cette liaison est réalisée de telle sorte que, lorsque la fiche 12 est assemblée à la prise conjuguée 7, il y a continuité de liaison électrique entre la liaison bifilaire 10 et la liaison bifilaire 14. L'ouverture et la fermeture du contacteur 13 sont ainsi commandées par l'unité 4, via sa sortie 10.

En vol et pendant un certain temps, après l'atterrissage, la ligne 3 est alimenté en énergie électrique par les génératrices de bord 2, le contacteur X1 étant ouvert et le contacteur X2 fermé.

Lorsque, l'avion étant au sol, on désire alimenter l'avion par la source extérieure par l'intermédiaire du câble Dn, on branche la fiche 12 dans la prise extérieure 7 de l'avion. Le contacteur 13 est alors ouvert, de sorte que ce branchement est effectué avec la fiche 12 hors-tension.

A partir du poste de pilotage, on envoie alors, via la liaison 5, un ordre de transfert des alimentations à l'unité de commande 4. Cette dernière alimente alors tout d'abord la liaison bifilaire 10 de sorte que la liaison bifilaire 14, est également alimentée, et contrôle la fermeture du contacteur triphasé 13. Les prises 12-7 sont alors alimentées en énergie électrique par le câble extérieur Dn.

L'unité 4 détecte alors, via la liaison 9, la présence d'une tension triphasée sur la prise 7. Elle commande en conséquence, via la liaison symboliquement représentée en 15, les génératrices de bord 2 pour réaliser leur mise en phase avec la tension extérieure, prélevée sur la liaison triphasée de mesure 9. Dans les avions actuels, cette mise en phase est considérée comme satisfaisante par l'unité 4 lorsqu'elle est réalisée à +/- 90 degrés près.

L'unité 4 commande alors la fermeture du contacteur X1 puis, environ 60 millisecondes après, l'ouverture du contacteur X2. La ligne 3 est alors uniquement alimentée par la source extérieure, après un recouvrement de 60ms avec la source intérieure 2.

Cette façon de procéder s'est néanmoins révélée dangereuse, en particulier (mais pas exclusivement) lorsque la source extérieure 25 est réalisée à partir du réseau électrique à l'aide de convertisseurs statiques.

En effet, la mise en parallèle des deux sources triphasées 25 et 2, qui dure environ 60ms alors que ces deux sources ne sont en phase qu'à 90 degrés près, peut entraîner des échanges de puissance électrique entre elles dont les conséquences peuvent être:
- un arrêt automatique de la source extérieure 25 en surcharge,
- une destruction de la source extérieure 25, si de l'énergie électrique lui est fournie par la source intérieure (génératrice de bord) 2, les convertisseurs statiques n'étant pas en mesure d'absorber de l'énergie.
- une rupture d'arbre dans les génératrices 2 due à des contraintes entraînées par l'augmentation brusque de puissance à délivrer par ces génératrices,ce qui est encore bien plus grave car affectant l'avion lui-même.

Le remplacement ultérieur de la source extérieure par la source intérieure 2 s'effectue par les opérations inverses: mise en phase à +/-90 degrés près des génératrices 2 sur la tension extérieure, fermeture du contacteur X2 et ouverture du contacteur X1, 60 millisecondes après, puis ouverture du contacteur extérieur 13 et débranchement de la fiche 12. Pendant la période de recouvrement de 60 millisecondes, les phénomènes dommageables cités ci-dessus peuvent se produire exactement de la même façon.

L'invention vise à remédier à ces inconvénients.

Le dispositif de couplage selon l'invention est caractérisé en ce qu'il comporte un contacteur statique bidirectionnel connecté entre la source extérieure et une prise d'entrée d'alimentation de l'avion, une impédance connectée en parallèle sur le contacteur statique, des moyens de mesure de la tension aux bornes de la prise et une unité de traitement connectée aux moyens de mesure de tension et à des bornes de commande du contacteur de manière à commander la fermeture du contacteur lorsque la tension mesurée devient inférieure à un premier seuil prédéterminé.

Ce dispositif comporte de préférence, des moyens de mesure du courant le traversant, l'unité de traitement étant connectée aux moyens de mesure de courant de manière à commander l'ouverture du contacteur lorsque le courant mesuré est supérieur à un second seuil prédéterminé.

Selon un développement, l'unité de traitement comporte des moyens de calcul de la puissance active fournie par le dispositif, en fonction de la tension et du courant mesurés, et commande l'ouverture du contacteur lorsque ladite puissance active est négative, et des moyens de temporisation maintenant le contacteur ouvert pendant une période de temporisation prédéterminée après avoir commandé son ouverture.

Dans un mode de réalisation préférentiel, le contacteur comporte deux thyristors tête-bêche commandés simultanément par l'unité de traitement, et l'impédance est une résistance de valeur élevée, par exemple de l'ordre d'une centaine d'ohms, par rapport à l'impédance de charge nominale de la source extérieure.

Généralement l'alimentation est une alimentation polyphasée, ledit dispositif comportant un contacteur et une résistance associée par phase, les moyens de mesure de tension et de courant mesurant la tension et le courant de chacune des phases, l'unité de traitement contrôlant simultanément l'ensemble des contacteurs.

L'unité de traitement comporte de préférence des moyens de redressement des tensions mesurées et des moyens de comparaison du signal de sortie des moyens de redressement au premier seuil prédéterminé, et éventuellement des moyens de sommation vectorielle des tensions mesurées sur les différentes phases, et des moyens de comparaison du signal de sortie desdits moyens à un troisième seuil prédéterminé de manière à commander la fermeture des contacteurs lorsque ledit signal de sortie est inférieur audit troisième seuil.

De toute façon, l'invention sera bien comprise, et ses avantages et autres caractéristiques ressortiront, lors de la description suivante d'un exemple non limitatif de réalisation, en référence aux dessins schématiques annexés dans lesquels:

La figure 2 est un schéma synoptique de l'ensemble du dispositif, tel qu'il est destiné à être branché sur le circuit d'avion référencé 1 sur la figure 1 décrite ci-dessus.

La figure 3 est un schéma électrique d'un mode de réalisation particulier du contacteur statique auxiliaire de la figure 2.

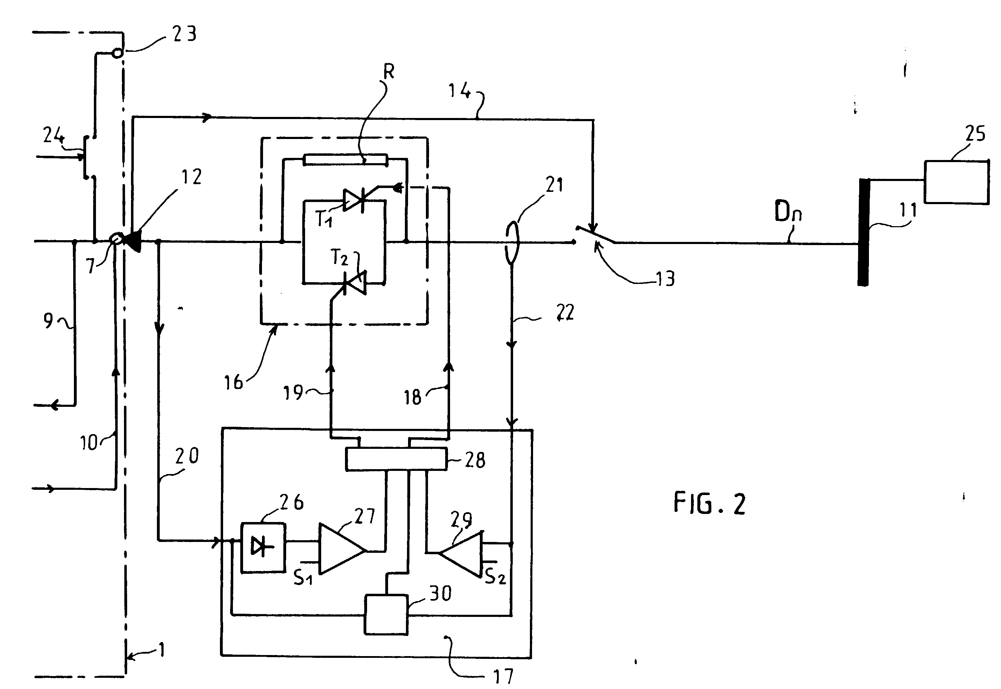

Le dispositif selon l'invention comporte, pour chaque phase, un contacteur statique 16 dont un seul est représenté sur la figure 2 pour ne pas compliquer inutilement la figure. Le contacteur 16 est intercalé sur la ligne extérieure Dn, entre le contacteur électromécanique 13 et la prise multibroches 12.

Pour plus de clarté, ce contacteur statique 16 est aussi représenté, sous sa forme triphasée intégrale sur la figure 3.

Il comporte sur chaque phase un couple de thyristors tête-bêche T1,T2. Ces deux thyristors sont commandés ensemble soit à l'allumage, soit à l'extinction par une unité électronique centrale 17 de mesure, de calcul et de commande, respectivement par les sorties 18,19 de cette dernière.

Une impédance, constituée par une résistance R dans le mode de réalisation représenté sur les figures, est branchée en parallèle sur chaque couple de thyristors T1,T2. La valeur de cette résistance R doit être grande par rapport à l'impédance nominale de charge de la source extérieure 25 qui alimente la barre de distribution 11. Comme cette impédance nominale est faible, la résistance R peut en principe avoir une valeur allant de quelques ohms à quelques centaines d'ohms. En réalité, elle ne doit être ni trop faible pour ne pas avoir une dissipation et donc un volume exagéré, ni trop importante pour ne pas affecter la mesure de tension extérieure qui est réalisée (voir figure 1) par l'unité 4 via la liaison de mesure 9. Un compromis entre ces deux conditions est réalisé en adoptant, pour cette résistance R, une valeur de l'ordre d'une centaine d'ohms.

Il est en outre prévu, pour chaque phase, une mesure de la tension appliquée à la fiche 12 qui constitue une entrée de mesure 20 de l'unité centrale 17 et une mesure du courant traversant le contacteur 16, grâce à un transformateur de mesure 21, le signal d'intensité ainsi capté étant appliqué sur une entrée de mesure 22 de l'unité électronique centrale de traitement 17.

Le fonctionnement du dispositif, examiné à la lumière de l'ensemble des figures 1 à 3, est le suivant: Lorsque l'on veut remplacer l'alimentation par la source interne 2 de l'avion par l'alimentation par la source extérieure 25, la procédure vue de l'avion lui-même 1 est inchangée: fermeture du relais extérieur 13, mise en phase approximative des génératrices 2 sur la source extérieure 25, fermeture du contacteur X1, puis ouverture du contacteur X2 au bout de 60 millisecondes.

A la fermeture du contacteur X1 cependant, l'alimentation de la ligne 3 par la source 25 s'effectue à travers les résistances R, les six thyristors T1,T2 étant tous bloqués. Pendant la période de recouvrement de 60ms où les deux contacteurs X1 et X2 sont fermés, aucun des phénomènes dommageables précités ne peut se produire en raison de l'intercalation sur la ligne Dn de ces résistances relativement élevées R: le courant dans la ligne est de trop faible intensité pour qu'il y ait la moindre perturbation effective.

Lorsque le contacteur X2 s'ouvre, l'alimentation de la ligne 3 s'effectue alors par la source 25 à travers les résistances R, ce qui bien entendu est insuffisant à forte puissance, de sorte que la tension extérieure sur les bornes 7 et 12 chute brusquement. Cette chute de la tension triphasée e1,e2,e3 (figure 3) est mesurée et détectée par l'unité de traitement 17. Celle-ci comporte par exemple un redresseur hexaphasé 26 et un circuit à seuil 27 comparant le signal de sortie du redresseur à un seuil prédéterminé S1, et émet (interface 28) des signaux de commande d'allumage des thyristors T1,T2 sur ses sorties de commande correspondantes 18 et 19, lorsqu'elle détecte des tensions inférieures au seuil prédéterminé S1. Le contacteur statique 16 est alors fermé et la source extérieure 25 alimente directement, et à pleine puissance, la ligne 3 via les contacteurs fermés 13,16 et X1.

La mesure de tension peut correspondre aux valeurs crêtes de chacune des demi-alternances redressées successives. Dans un cas extrême, la détection de la chute de tension n'est effectuée que deux demi-alternances après l'ouverture des contacts du contacteur triphasé X2. Si cette détection dépasse quelques millisecondes en durée, elle risque d'entraîner un manque prohibitif d'alimentation en énergie de la ligne 3, et donc des ordinateurs de bord. C'est pourquoi selon une variante de réalisation, cette détection est effectuée par un dispositif (non représenté), intégré à l'unité 17, de mesure de la somme vectorielle des tensions e1,e2,e3. Cette somme vectorielle est normalement nulle, et elle ne l'est plus dès que la tension chute sur une des trois phases, quelle que soit celle-ci (e1,e2 ou e3). L'unité de traitement 17 peut alors, par un circuit à seuil, détecter quasi-instantanément la chute de la tension extérieure. Ce dispositif peut avantageusement être mis en parallèle sur le dispositif de redressement et de mesure précité, les deux critères de détection de la chute de tension étant alors utilisés en parallèle, le plus rapide entraînant la fermeture du contacteur 16.

Toutefois, il ne faut pas non plus que la commande d'allumage des thyristors T1,T2 soit exagérément rapide, car il se peut qu'elle se produise tandis qu'en réalité les trois contacts du contacteur triphasé X2 ne sont pas tous encore ouverts, mais seulement un ou deux d'entre eux. Dans un tel cas il y aurait alors mise en parallèle des deux sources 2 et 25 sur une ou deux phases, et donc risque de déclenchement des phénomènes destructeurs décrits précédemment. C'est pourquoi, si l'on n'est pas certain d'avoir utilisé, dans I'unité 17, des circuits de calcul et de commande assez lents pour laisser au contacteur X2 le temps de s'ouvrir totalement, il est avantageux de prévoir, grâce à une temporisation de par exemple environ une milliseconde incorporée à l'unité 17 (dans l'interface 28) d'appliquer les signaux de fermeture sur les fils 18 et 19 avec un léger retard (de l'ordre de la milliseconde dans cet exemple).

Lorsqu'à l'inverse, l'avion devant repartir, on veut remplacer la source extérieure 25 par les génératrices de bord 2, la procédure vue de l'avion est toujours la même qu'avec le dispositif de la figure 1: commande de mise en phase approximative des génératrices 2 sur la source extérieure, fermeture du contacteur X2, puis ouverture du contacteur X1 environ 60 millisecondes après, et finalement commande de l'ouverture du contacteur 13 pour que l'opérateur puisse débrancher en toute sécurité la prise 12. A la fermeture du contacteur X2, trois cas peuvent se présenter:
. Ou bien les génératrices 2 sont par hasard bien en phase avec la source extérieure 25. Dans un tel cas, aucun phénomène dommageable n'est à craindre et rien de spécial ne se produit. Le recouvrement ne donne lieu à aucune action automatique, et les thyristors T1 et T2 continuent à conduire normalement. Ils s'éteignent bien entendu, faute de tension à leurs bornes, lorsque le contacteur extérieur 13 est ouvert sous la commande de l'unité 4.
. Ou bien il existe un déphasage entre les deux sources, et le déphasage est tel qu'il entraîne une surintensité de courant s'écoulant, dans la ligne Dn. Cette surintensité est alors immédiatement détectée par un comparateur 29, de l'unité de traitement 17, qui reçoit du capteur de courant 21 et de la liaison 22, la valeur mesurée et la compare à un seuil S2. L'unité 17 commande l'envoi immédiat de signaux de blocage des thyristors T1,T2 sur les liaisons 18,19 lorsque la surintensité est détectée. La source 25 est de ce fait pratiquement mise hors circuit, compte tenu de la valeur relativement élevée des résistances R.
. Ou bien ce dernier déphasage est tel qu'il entraîne une circulation de courant de valeur inférieure au seuil de surintensité S2, mais tel que la puissance active sur la ligne Dn, calculée par des moyens 30 de l'unité 17 à partir des valeurs de tension 20 et de courant 22 mesurées est négative. L'unité 17 (circuits 30 et 28) commande alors le blocage immédiat des thyristors T1,T2.

Dans ces deuxième et troisièmes cas, il convient de prévoir, dans l'interface 28, une temporisation t assurant pendant au moins plusieurs dizaines de millisecondes le maintien des signaux de blocage sur les fils de commande 18 ou 19. En l'absence de cette temporisation t, les thyristors risqueraient de se rallumer immédiatement en raison de signaux perturbateurs pouvant être engendrés dans l'installation par leur changement d'état.

Dans un cas particulier de configuration de l'avion, explicité ci-dessous, la temporisation t devra être déterminée de façon à ne pas dépasser une trentaine de millisecondes environ.

Tel est le cas lorsque, comme représenté sur la figure 2, il est prévu sur l'avion une ou plusieurs prises extérieures additionnelles 23 qui sont reliées par des contacteurs 24 à la prise 7 en aval (par rapport aux génératrices 2) du contacteur X1. Les contacteurs 24, sont commandées à partir du poste de pilotage de manière à ce que les prises 23 soient, au sol, alimentées par la source extérieure 25 pour faire fonctionner différents appareils au sol, tels que par exemple des élévateurs destinés au chargement et au déchargement de l'avion.

Si un appareil de ce genre est branché sur une prise 23, le contacteur associé 24 étant fermé, lors de l'opération précédemment décrite de remplacement de la source interne 2 par la source extérieure 25, la fermeture préalable du contacteur 13 va tout d'abord entraîner, en raison de la charge constituée par l'appareil, la mise en conduction des thyristors T1,T2, ce qui en soi n'est pas dommageable.

En revanche, la fermeture du contacteur X1, qui est normalement réalisée ensuite, entraîne alors une surintensité dans la ligne Dn qui est détectée via le capteur 21 et entraîne alors le blocage des thyristors T1,T2, avec une temporisation t de maintien de l'état bloqué.

Si cette temporisation t est élevée, par exemple si elle est de 100 millisecondes, rien de dommageable ne se produira pendant les 60 millisecondes de recouvrement pendant lesquelles les contacteurs X1 et X2 sont tous deux fermés. En revanche, le contacteur X2 s'ouvrira au bout de ces 60 millisecondes, de sorte que pendant les 40 millisecondes restantes, la ligne 3 ne recevra pratiquement aucune énergie électrique car, bien que le contacteur X1 soit fermé, la source extérieure ne peut délivrer de l'énergie qu'à travers les résistances R. Il se créera ainsi un manque prohibitif d'alimentation des ordinateurs de bord, alors que celle-ci ne peut pas souffrir de coupure supérieure à quelques millisecondes.

Il convient donc d'adopter pour la temporisation t précitée une valeur qui n'est en tous cas pas supérieure à 60 millisecondes, mais qui est néanmoins suffisante. Une valeur de l'ordre de 30 millisecondes a été trouvée satisfaisante, et dans un tel cas le dispositif de l'invention fonctionne de manière sûre: les thyristors T1,T2 sont bloqués lorsque le contacteur X2 s'ouvre en fin du cycle, et ils sont alors immédiatement commandés à la fermeture (allumage) par la chute de la tension sur la prise extérieure 7.

Bien entendu, l'invention n'est pas limitée à l'exemple de réalisation qui vient d'être décrit. C'est ainsi notamment que la source extérieure peut être de toute autre sorte qu'une source utilisant des convertisseurs statiques: groupe électrogène ou autres. Les résistances R pourraient, par exemple, être remplacées par des impédances, mais cette solution est plus coûteuse.

## Revendications

1. Dispositif de couplage d'une source extérieure (25) d'alimentation en énergie électrique alternative à un avion au sol, caractérisé en ce qu'il comporte un contacteur statique (16) bidirectionnel connecté entre la source extérieure (25) et une prise (7,12) d'entrée d'alimentation de l'avion, une impédance (R) connectée en parallèle sur le contacteur statique (16), des moyens (20) de mesure de la tension aux bornes de la prise (12) et une unité de traitement (17) connectée aux moyens de mesure de tension et à des bornes de commande du contacteur de manière à commander la fermeture du contacteur lorsque la tension mesurée devient inférieure à un premier seuil prédéterminé (S1).

2. Dispositif selon la revendication 1, caractérisé en ce qu'il comporte des moyens (21) de mesure du courant le traversant, l'unité de traitement (17) étant connectée aux moyens de mesure de courant de manière à commander l'ouverture du contacteur (16) lorsque le courant mesuré est supérieur à un second seuil prédéterminé (S2).

3. Dispositif selon la revendication 2, caractérisé en ce que l'unité de traitement (17) comporte des moyens (30) de calcul de la puissance active fournie par le dispositif, en fonction de la tension et du courant mesurés, et commande l'ouverture du contacteur (16) lorsque ladite puissance active est négative.

4. Dispositif selon la revendication 3, caractérisé en ce que l'unité de traitement (17) comporte des moyens de temporisation maintenant le contacteur (16) ouvert pendant une période de temporisation (t) prédéterminée après avoir commandé son ouverture.

5. Dispositif selon la revendication 4, caractérisé en ce que la période de temporisation (t) est inférieure à 60ms, et de préférence voisine de 30ms.

6. Dispositif selon l'une quelconque des revendications 1 à 5, caractérisé en ce que le contacteur (16) comporte deux thyristors (T1,T2) tête-bêche commandés simultanément par l'unité de traitement.

7. Dispositif selon l'une quelconque des revendications 1 à 6, caractérisé en ce que l'impédance est une résistance (R) de valeur élevée, par exemple de l'ordre d'une centaine d'ohms, par rapport à l'impédance de charge nominale de la source extérieure (25).

8. Dispositif selon l'une quelconque des revendications 1 à 7, caractérisé en ce que l'alimentation est une alimentation polyphasée, ledit dispositif comportant un contacteur (16) et une impédance (R) associée par phase, les moyens de mesure de tension et de courant mesurant la tension et le courant de chacune des phases, l'unité de traitement (17) contrôlant simultanément l'ensemble des contacteurs.

9. Dispositif selon la revendication 8, caractérisé en ce que l'unité de traitement (17) comporte des moyens de redressement (26) des tensions mesurées et des moyens (27) de comparaison du signal de sortie des moyens de redressement au premier seuil prédéterminé.

10. Dispositif selon l'une des revendications 8 et 9, caractérisé en ce que l'unité de traitement (17) comporte des moyens de sommation vectorielle des tensions mesurées sur les différentes phases, et des moyens de comparaison du signal de sortie desdits moyens à un troisième seuil prédéterminé de manière à commander la fermeture des contacteurs lorsque ledit signal de sortie est inférieur audit troisième seuil.

## Patentansprüche

1. Anordnung zur Ankopplung einer externen Wechselstromversorgung (25) an ein am Boden stehendes Flugzeug, dadurch gekennzeichnet, daß sie einen, zwischen die externe Stromversorgung (25) und eine Einspeise-Steckverbindung (7, 12) des Flugzeugs eingesetzten bidirektionalen elektronischen Schalter (16), eine parallel zu dem elektronischen Schalter (16) angeordnete Impedanz (R), Mittel (20) zur Messung der an den Klemmen des Steckers (12) anliegenden Spannung sowie eine Steuerelektronik (17) umfaßt, die an die Spannungsmeßmittel und an Steuerklemmen des elektronischen Schalters angeschlossen ist, um das Einschalten des Schalters zu steuern, wenn die gemessene Spannung einen festgelegten ersten Schwellwert (S1) unterschreitet.

2. Anordnung nach Anspruch 1, dadurch gekennzeichnet, daß sie Mittel (21) zur Messung des sie durchfließenden Stroms aufweist, wobei die Steuerelektronik (17) an die Strommeßmittel angeschlossen ist, so daß sie die Abschaltung des elektronischen Schalters (16) steuert, wenn der gemessene Strom einen festgelegten zweiten Schwellwert (S2) überschreitet.

3. Anordnung nach Anspruch 2, dadurch gekennzeichnet, daß die Steuerelektronik (17) Mittel (30) zur Berechnung der von der Anordnung bereitgestellten Wirkleistung in Abhängigkeit von den gemessenen Spannungs- und Stromwerten aufweist und die Abschaltung des elektronischen Schalters (16) steuert, wenn die genannte Wirkleistung negative Werte annimmt.

4. Anordnung nach Anspruch 3, dadurch gekennzeichnet, daß die Steuerelektronik (17) Verzögerungsmittel aufweist, die den elektronischen Schalter (16) über eine festgelegte Verzögerungszeit (t) nach Erteilung des Ausschaltbefehls in der Ausschaltstellung halten.

5. Anordnung nach Anspruch 4, dadurch gekennzeichnet, daß die Verzögerungszeit (t) unter 60 ms liegt und vorzugsweise etwa 30 ms beträgt.

6. Anordnung nach irgendeinem der Ansprüche 1 bis 5, dadurch gekennzeichnet, daß der elektronische Schalter (16) zwei Thyristoren (T1, T2) in Antiparallelschaltung umfaßt, die gleichzeitig von der Steuerelektronik (17) angesteuert werden.

7. Anordnung nach irgendeinem der Ansprüche 1 bis 6, dadurch gekennzeichnet, daß die Impedanz als im Bezug zur Nennlastimpedanz der externen Stromversorgung (25) hoch bemessener Widerstand (R) von etwa 100 Ohm ausgebildet ist.

8. Anordnung nach irgendeinem der Ansprüche 1 bis 7, dadurch gekennzeichnet, daß es sich bei der Stromversorgung um eine Mehrphasen-Stromversorgung handelt, wobei die genannte Anordnung einen elektronischen Schalter (16) und einen zugeordneten Widerstand (R) pro Phase aufweist, die Strom- und Spannungsmeßmittel den Strom und die Spannung in jedem Phasenkreis messen und die Steuerelektronik (17) sämtliche elektronischen Schalter gleichzeitig ansteuert.

9. Anordnung nach Anspruch 8, dadurch gekennzeichnet, daß die Steuerelektronik (17) Mittel (26) zur Gleichrichtung der gemessenen Spannungen sowie Mittel (27) zum Vergleich des Ausgangssignals der Gleichrichtmittel mit dem festgelegten ersten Schwellwert umfaßt.

10. Anordnung nach einem der Ansprüche 8 und 9, dadurch gekennzeichnet, daß die Steuerelektronik (17) Mittel zur Bildung der Vektorsumme der gemessenen Spannungen in den einzelnen Phasen sowie Mittel zum Vergleich des Ausgangssignals dieser Mittel mit einem festgelegten dritten Schwellwert umfaßt, derart daß sie die Einschaltung der elektronischen Schalters steuert, wenn das genannte Ausgangssignal den genannten dritten Schwellwert unterschreitet.

## Claims

1. A device for connecting an external A.C. electrical power supply source (25) to an aircraft on the ground, characterized in that it comprises a two-way static switch (16) connected between the external source (25) and a power supply input connector (12) and socket (7) of the aircraft, an impedance (R) connected in parallel to the static switch (16), means (20) for measuring the voltage at the terminals of the connector (12) and a processing unit (17) connected to the means for measuring the voltage and to control terminals of the switch so as to bring about closing of the switch when the voltage measured drops below a first preset threshold (S1).

2. The device according to claim 1, characterized in that it comprises means (21) for measuring the current flowing through it, the processing unit (17) being connected to the means for measuring the current so as to bring about opening of the switch (16) when the current measured is greater than a second preset threshold (S2).

3. The device according to claim 2, characterized in that the processing unit (17) comprises means (30) for computing the active power supplied by the device, according to the voltage and current measured, and orders opening of the switch (16) when said active power is negative.

4. The device according to claim 3, characterized in that the processing unit (17) comprises time delay means keeping the switch (16) open for a preset time delay period (t) after ordering it to open.

5. The device according to claim 4, characterized in that the time delay period (t) is lower than 60 ms, and preferably close to 30 ms.

6. The device according to any one of the claims 1 to 5, characterized in that the switch (16) comprises two head-to-tail thyristors (T1; T2) controlled simultaneously by the processing unit.

7. The device according to any one of the claims 1 to 6, characterized in that the impedance is a resistance (R) of high value, for example about one hundred ohms, in comparison with the rated load impedance of the external source (25).

8. The device according to any one of the claims 1 to 7, characterized in that the power supply is a multiphase power supply, said device comprising a switch (16) and associated impedance (R) per phase, the means for measuring the voltage and current measuring the voltage and current of each of the phases, the processing unit (17) controlling all the switches simultaneously.

9. The device according to claim 8, characterized in that the processing unit (17) comprises means (26) for rectifying the voltages measured and means (27) for comparing the output signal of the rectifying means with the first preset threshold.

10. The device according to one of the claims 8 or 9, characterized in that the processing unit (17) comprises means for performing vector summing of the voltages measured on the different phases, and means for comparing the output signal of said means with a third preset threshold so as to order closing of the switches when said output signal is lower than said third threshold.
